# EUROPEAN PATENT SPECIFICATION

(11) **EP 2 471 960 B1**
(45) Date of publication and mention of the grant of the patent: **18.06.2014**
(21) Application number: 10382366.2
(22) Date of filing: 30.12.2010
(51) Int. Cl.: C22C 33/08, C22C 37/10, B22C 9/02, B22D 1/00, C21C 1/10, C22C 37/04, C21D 5/00, C21D 9/30, F16C 3/04

(54) **Method for manufacturing a cast iron part and cast iron part thus obtained**
Verfahren zur Herstellung einem Kugelgraphit-Gusseisenteil
Procédé d'élaboration de pièces en fonte à graphite sphéroïdal

(43) Date of publication of application: 04.07.2012
(73) Proprietor: Casa Maristas Azterlan, 48200 Durango (Vizcaya) (ES); Infun S.A., 08620 Sant Vicenç dels Horts Barcelona (ES)
(72) Inventor: Sertucha Perez, Jon, 48200 DURANGO (Vizcaya) (ES); Serrallach Perarnau, Joan, 08620 SANT VICENÇ DELS HORTS (BARCELONA (ES); Suarez Creo, Ramon, 48200 DURANGO (Vizcaya) (ES); Monzón Gracia, Adrian, 08620 SANT VICENÇ DELS HORTS (BARCELONA (ES)
(74) Representative: Stiebe, Lars Magnus

(56) References cited:
- EP-A2- 0 144 907
- JP-A- 2000 026 932
- US-A- 5 551 995
- SERRALLACH J ET AL: "Effect of selected alloying elements on mechanical properties of pearlitic nodular cast irons", KEY ENGINEERING MATERIALS - SCIENCE AND PROCESSING OF CAST IRON IX 2011 TRANS TECH PUBLICATIONS LTD CHE, vol. 457, 10 November 2010 (2010-11-10), pages 361-366, XP9147773, DOI: DOI:10.4028/WWW.SCIENTIFIC.NET/KEM.457.361
- SUAREZ R ET AL: "Influence of different inoculants on the nucleation potential and the contraction ability of the ductile iron", REVISTA DE METALURGIA (MADRID) SEPTEMBER-OCTOBER 2009 CENTRO NACIONAL DE INVESTIGACIONES METALURGICAS ESP, vol. 45, no. 5, September 2009 (2009-09), pages 339-350, XP002635022, DOI: DOI:10.3989/REVMETALM.0840
- BALLOY D ET AL: "Improvements in the characteristics of nodular graphite cast iron for crankshafts", STEEL RESEARCH INTERNATIONAL, VERLAG STAHLEISEN GMBH., DUSSELDORF, DE, vol. 78, no. 2, 1 February 2007 (2007-02-01), pages 167-172, XP001518231, ISSN: 1611-3683

## Description

### Field of the Invention

The present invention is encompassed within the sector of metallurgical industry. Particularly, it relates to the manufacture of a spheroidal pearlitic cast iron and a method for obtaining it, which is used as a more economical alternative to the materials currently used, achieving optimized mechanical and functional properties, maximizing the breaking load and stretch limit and likewise maintaining the maximum elongation, all that in the as-cast condition, i.e., without the need for subsequent heat treatments.

### Background of the Invention

There is currently a significant development in the industrial manufacture of high performance spheroidal cast iron parts for example for the automotive in the state of the art. In this sense, the design of new cast irons having optimized mechanical properties and which are easier and more economical to obtain is constant.

The addition of specific micro-alloy elements forms a methodology for improving determined properties well known in the sector of steels. However, the use of these additions in spheroidal graphite cast irons continues to be limited. Generally, it can be stated that the effect of the chemical alloy elements and the processing conditions on the mechanical properties of spheroidal cast irons do not follow a behavior similar to that observed for steels.

The structural characteristics and the mechanical properties of the currently known cast irons are not completely satisfactory and limit the use thereof to sectors such as automotive parts construction, as alternatives to other also currently used materials having high manufacturing costs.

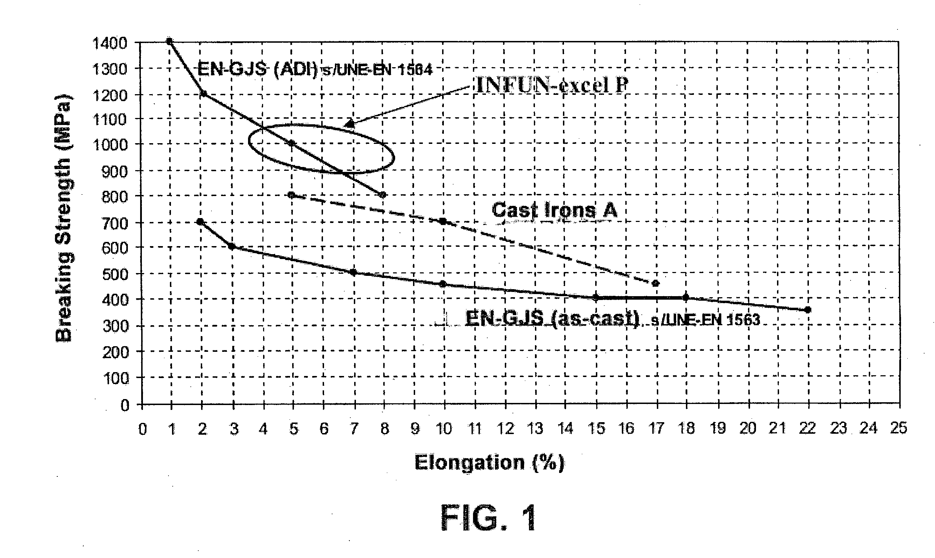

Today, spheroidal graphite cast irons are able to cover a significant range of mechanical features. The properties of spheroidal graphite cast irons in the as-cast condition, as established in EN-1563 standard, as well as the mechanical properties of austempered ductile irons (ADI) and the cast irons described in the International patent application with publication number WO2006/056334 can be seen in the graph of Figure 1. These latter cast irons are shown in Figure 1 (designated as cast irons A) and are based on the EN-GJS-400 cast iron quality, with the incorporation of B, variable contents of Si and some other chemical alloy element, and their application is directed towards the manufacture of parts for automobile industry. They are iron alloys with a high silicon content and additions of boron; boron is known to be a chemical element which is difficult to be incorporated in the molten metal and has recognized capacities for generating carbides in the metal matrix of the materials to which it is added. Therefore, one of the difficulties of the method for obtaining this alloy, in addition to the difficulties of boron in being incorporated in the molten metal, is the need to precisely control its concentrations, so the processing methodologies for obtaining this alloy are considerably complicated, with the consequent impact this has on the production costs of parts manufactured from said cast iron.

Despite the fact that cast irons A are improved in the sense that additional heat treatment for example is not needed, their mechanical and functional properties are not completely satisfactory. This may be at least in part due to their non-homogenous matrix. In this sense, application WO2006/05633 describes perlite contents comprised between 70-90% and Example 1 particularly discloses a perlite content of 84% .

In turn, the manufacture of automotive parts subjected to great stresses requires materials having a high breaking strength and high stretch limit and, as much as possible, high elongation values. In this sense, spheroidal graphite irons do not usually exceed 700-750 MPa in materials with pearlitic structures and the elongation does not usually exceed 3%. On the other hand, the ductility requirements lead to manufacturing cast irons with lower hardness and strength values, such that there is a significant absence for optimizing determined applications, especially in automotive parts intended as components of high-powered engines.

Serrallach, J. et al., in "Effect of selected alloying elements on mechanical properties of pearlitic nodular cast irons", Key Eng.Mat.-Sc. And Proc. Of Cat Iron IX 2011 TRANS TECH Publ., vol. 457, 10 November 2010, p. 361/6 disclose the use of a commercial inoculant in the fabrication of a pearlitic spheroidal cast iron, and the effects of the alloying elements on the mechanical properties and the microstructure of it.

Suarez, R. et al., in "Influence of different inoculants on the nucleation potential and the contractionability of the ductile iron", Rev. de Metalurgia (Madrid, ES) Sept-Oct. 2009 Centro Nac. De Invenstig. Metal., vol. 45, no. 5, September 2009, p. 339/50, disclose the use of several inoculants in the manufacture of cast iron, in the majority ferritic, in view of the compositions of Table II, where the contents of the pearlitizing components are clearly inferior.

From the foregoing it can be inferred that there continues to be a need in the state of the art to provide a spheroidal pearlitic cast iron with improved mechanical and functional properties having higher breaking load, stretch limit and elongation values, without the need of applying any additional heat treatment, for the purpose of increasing the application possibilities and the performances of cast irons of this type in industry, as well as their efficiency both because of the properties and the lower production cost thereof.

### Brief Description of the Figures

Figure 1 shows a graph in which the breaking load (R) in MPa has been represented on the y-axis against the elongation in percent (%) on the x-axis, and in which the values of (i) an austemperized ductile iron (ADI) with heat treatment according to the EN-1564 standard; (ii) a cast iron A as described in patent application WO2006/056334; (iii) a conventional spheroidal cast iron in as-cast condition according to the EN-1563 standard and (iv) cast irons according to the present invention identified as INFUN-excel P are compared.

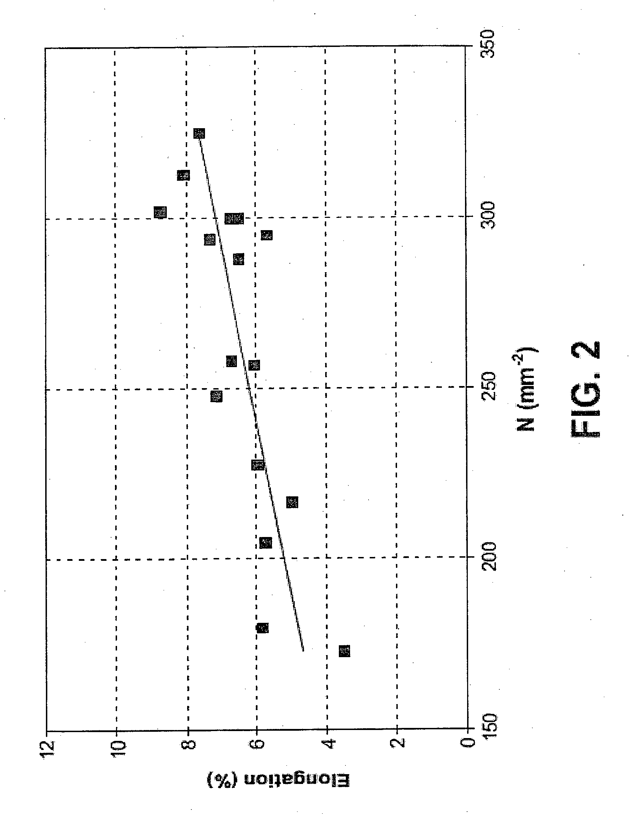

Figure 2 shows a graph in which the elongation in (%) has been represented on the y-axis against the number of graphite spheroids (N) in (mm⁻²) on the x-axis, for samples of the cast of the invention.

### Description of the Invention

In one aspect the invention relates to a method for manufacturing a spheroidal pearlitic cast iron part with a pearlite content equal or greater than 90% with improved mechanical and functional properties. The method, hereinafter the method of the invention, comprises the following steps:
(i) preparing an alloy the chemical composition of which is the following (percentages expressed by weight with respect to the total weight of the alloy)
   C = 3.60-3.70%;
   Si = 2.20-2.30%;
   Mn = 0.40-0.60%;
   P = 0.02-0.04%;
   S = 0.005-0.008%;
   Cu = 0.90-1.00%;
   Mg = 0.03-0.04%;
   N = 0.005-0.008%;
   the rest of the chemical composition being Fe and other residual elements;
(ii) casting the alloy in a sand mold;
(iii) inoculating an inoculant material in a casting vein with an addition flow rate comprised between 0.6 and 0.8 g/kg, in an amount comprised between 0.20-0.25% by weight with respect to the amount of cast alloy,
wherein said inoculant material has a granulometry comprised between 0.1 and 0.5 mm and a chemical composition selected between (percentages expressed by weight with respect to the total weight of the inoculant):
a) Si = 75.1%; Al = 0.89%; Ca = 0.93%; S = 0.11% and Ce = 0.70%; or
b) Si = 73.1 %; Al = 0.71%; Ca = 1.75%; S = 0.06% and Bi = 0.88%,
   the rest being iron.

The preparation of the alloy is performed conventionally by adding and adjusting the amounts of the starting materials. The molten alloy is cast in the following step by using any conventional means. The forms of casting are essentially casting with an automatic casting system or by using ladles and pouring the alloy into the mold. In a particular embodiment a semiautomatic ladle is used. The mold used is a sand mold (green chemical or sand molding). Any horizontal or vertical molding machines, molding lines capable of manufacturing sand molds can be used.

The inoculation or supply of graphite growth seeds in the still liquid alloy is a critical step in alloy solidification. Graphite spheroid formation is optimized and the formation of carburized phases in areas with reduced thickness and/or in areas in which there is a high rate of cooling is avoided in the as-cast condition. The inoculation is performed in the usual manner. Figure 2 shows the change in elongation according to the number of graphite spheroids (N), a parameter also designated as "metal nucleation power", obtained after solidification.

In a particular embodiment of the method of the invention the alloy has the following chemical composition (percentages expressed by weight with respect to the total weight of the alloy): C = 3.62%; Si = 2.27%; Mn = 0.45%; P = 0.021 %; S = 0.008%; Cu = 0.98%; Mg = 0.033%; N = 0.008%; the rest of the composition being Fe and the usual residual elements. In this case the inoculant material used preferably has the following chemical composition: (percentage by weight with respect to the total weight of the inoculant) Si = 75.1 %; Al = 0.89%; Ca = 0.93%; S = 0.11% and Ce = 0.70%, the rest being Fe.

In another particular embodiment of the method of the invention the alloy has the following chemical composition (percentages expressed by weight with respect to the total weight of the alloy): C = 3.60%; Si = 2.21%; Mn = 0.45%; P = 0.023%; S = 0.007%; Cu = 1.01%; Mg = 0.040%; N = 0.007%, the rest of the chemical composition being Fe and other usual residual elements. In this case the inoculant material preferably has the following chemical composition: (percentage by weight with respect to the total weight of the inoculant): Si = 73.1%; Al = 0.71 %; Ca = 1.75%; S = 0.06% and Bi = 0.88% the rest being Fe.

In another aspect the invention relates to a spheroidal pearlitic cast iron part obtainable by means of the method of the invention. Due to its physical properties, the cast iron of the present invention is suitable for manufacturing parts that can be used in various industrial applications, particularly in the automotive industry as automotive parts, such as components for high-powered engines, for example Diesel engines. Due to the lower cost of obtaining it as well as the improved physical properties thereof, it can substitute and compete with the conventional materials: steels and austempered ductile irons (ADI).

In the context of the present invention spheroidal pearlitic cast iron part refers both to the spheroidal pearlitic cast iron itself that is obtained by means of the method of the invention and to any part with any shape, size and dimensions obtained from the same.

In a particular embodiment the cast iron part of the invention is a crankshaft. Examples of crankshafts and the manufacture thereof are described in Examples 1 and 2 of the present invention. The inventors have determined, as shown in said examples, the improvement in the properties of the cast iron of the present invention. Particularly, they have determined, among other properties, the breaking strength, stretch limit and elongation of these parts according to the invention. Upon comparing the results obtained herein with those obtained from a part manufactured from the material conventionally used in the manufacture of these crankshafts, it has been determined that the parts according to the present invention show an increase of 81 ±23 MPa in breaking strength, 56 ±19 MPa in stretch limit and a reduction of only 0.3 ±0.04% in elongation. The material usually used for manufacturing crankshafts corresponds to a cast iron with spheroidal graphite in as-cast condition and belongs to EN-GJS-700-2 quality (according to UNE-EN 1563:1998 standard). According to said standard, the requirements for this type of material are: minimum 700 MPa breaking strength, minimum 420 MPa stretch limit and minimum 2% elongation. Regarding these materials with a higher content in pearlitic phase, the inventors have determined that improvements in the mechanical properties achieved in the present invention with respect to the cast irons conventionally used for manufacturing crankshafts which likewise have highly pearlitic matrices are based on the properties of the pearlitic phase itself and not on the significant changes in the content of the pearlitic phase which form the matrix structure of the cast iron of the invention. In this sense, the spheroidal cast iron usually used for manufacturing crankshafts of this type has perlite contents between 90-97%, i.e., they are similar to the contents obtained in both crankshaft areas as analyzed in the examples. Therefore, the improvements achieved with the cast iron of the invention are direct consequent of the mechanical properties of the pearlitic phase.

On the other hand, the experimental tests performed by the inventors have shown that the parts obtained according to the method of the invention have improved mechanical properties, particularly, they have breaking strength (R) values greater than 900 MPa, preferably equal to or greater than 905 MPa, more preferably equal to or greater than 910 MPa, increased stretch limits (LE_{0,2}), while the elongation values remain high, i.e. comprised between 3.5-7.0% (see Figure 1).

As mentioned above, the inventors have determined that the perlite content of the matrix for the parts obtained is very high, greater than 90%, preferably greater than 95%, more preferably equal to or greater than 97%, and still more preferably equal to or greater than 99%. This determines that the materials obtained are therefore highly homogenous and particularly more homogenous than the cast irons described in WO2006/056334 and the cast irons previously mentioned. This high material homogeneity significantly contributes to improving the mechanical properties and the fatigue life of the parts manufactured according to the method of the present invention. The reduced ferrite content in the material of the invention contributes to reducing chafing in the manufactured parts, contributing to an increase of the service life thereof.

Regardless of the chemical composition of the metal in the as-cast condition, an important aspect to be taken into account is the influence of the process variables on the mechanical features ultimately obtained. When manufacturing a determined cast iron part, an increase in the section of the part produces a slight decrease in the breaking strength and stretch limit; however, in these conditions elongation increases.

Illustrative examples of the invention are presented below to aid in better understanding the invention, and in any case they should not be considered as limiting to the scope thereof.

### EXAMPLES

### Example 1. Manufacturing an automotive crankshaft

An automotive crankshaft weighing 9.6 kg was manufactured using the spheroidal graphite cast iron and the method described in the present invention.

It was made from an alloy the chemical composition of which was the following: (% by weight)
C = 3.62; Si = 2.27; Mn = 0.45; P = 0.021 S = 0.008; Cu = 0.98; Mg = 0.033; N = 0.008;

The rest of the composition being Fe and the usual residual elements.

The part was manufactured by casting said alloy in a green sand mold, which was manufactured in a high pressure Künkel-Wagner horizontal molding line.

The metal was cast in the molds using a semiautomatic ladle with a 2,000 kg capacity. The inoculation was performed by adding 0.21% of the inoculant product into the casting vein with an addition flow rate ranging between 0.6-0.8 g/kg. The granulometry of the inoculant was 0.1-0.5 mm and the chemical composition was: (% by weight) Si = 75.1; Al = 0.89; Ca = 0.93; S = 0.11 and Ce = 0.70, the rest being Fe.

The morphology of the graphite and the components of the matrix structure of the crankshaft were analyzed in two critical areas of the part: dowel pin (25-30 mm section) and flywheel (50-55 mm section) using a LEICA optical microscope. The graphite content in the dowel pin area was 10.2 ±0.8%, the number of graphite spheroids per mm⁻² was 352 ±32, the shape of the graphite corresponded with shape VI according to DIN EN ISO 945 standard by 96.4%, the size distribution according to DIN EN ISO 945 standard was: 40.1% for size 8, 51.1 % for size 7 and 8.8% for size 6. The content of the metal matrix was 97% perlite and 3% ferrite according to UNE 78001 standard. The graphite content in the flywheel area was 11.1 ±0.5%, the number of graphite spheroids per mm⁻² was 307 ±29, the shape of the graphite corresponded with shape VI according to DIN EN ISO 945 standard by 95.5%, the size distribution according to DIN EN ISO 945 standard was: 36.6% for size 8, 42.1% for size 7 and 21.3% for size 6. The content of the metal matrix according to UNE 78001 standard was 93% perlite and 7% ferrite. Test pieces intended for performing tensile (Zwick Z250) and Brinell hardness (Instron Wolpert) tests for the purpose of characterizing the physical properties of the part were obtained from the two areas of the crankshaft. The tensile test in the dowel pin area provided the following results: breaking strength R = 942.7 MPa, stretch limit LE_{0,2} = 586.1 MPa and elongation A = 4.9%. The material hardness in this area was 311 HBW 10/3000. In the flywheel area, the breaking strength was R = 937.2 MPa, stretch limit LE_{0,2} = 554.6 MPa and elongation A = 7.3%. The hardness was 302 HBW 10/3000.

### Example 2 Manufacturing an automotive crankshaft

An automotive crankshaft weighing 15.3 kg intended to form part of the high-powered engines in trucks was manufactured using the spheroidal graphite cast iron and the method described in the present invention.

It was made from an alloy the chemical composition of which was the following: (% by weight)
C = 3.60; Si = 2.21; Mn = 0.45; P = 0.023; S = 0.007; Cu = 1.01; Mg = 0.040; N = 0.007; the rest of the chemical composition being Fe and other usual residual elements.

The selected crankshaft was manufactured by casting the molten alloy in a green sand mold, which is manufactured in a high pressure Künkel-Wagner horizontal molding line.

The casting method was carried out with the aid of a semiautomatic ladle with a 2,000 kg capacity. The metal inoculation process was performed adding 0.24% of the inoculant product (granulometry 0.2-0.5 mm) into the casting vein with an addition flow rate ranging between 0.6-0.8 g/kg. The chemical composition of the inoculant used was the following: (% by weight) Si = 73.1; Al = 0.71; Ca = 1.75; S = 0.06 and Bi = 0.88, the rest being Fe.

For the purpose of studying the structural and mechanical properties of areas of the part subjected to different cooling conditions, two areas were selected: dowel pin (35-40 mm section) and flywheel (65-70 mm section). Metallographic inspections were performed in these two areas to determine graphite morphology and the components of the matrix structure by using a LEICA optical microscope. In addition, test pieces intended for performing tensile (Zwick Z250) and Brinell hardness (Instron Wolpert) tests on the manufactured material were obtained from these two areas. The graphite content observed in the dowel pin of the crankshaft was 11.0 ±0.7%, the number of graphite spheroids per mm⁻² was 275 ±22, the shape of the graphite corresponded with shape VI according to UNE-EN ISO 945-1 standard by 95.5%. This same standard was used to determine the size distribution: 34.1% for size 8, 49.2% for size 7 and 16.7% for size 6. The content of the metal matrix according to UNE 78001 standard was 99% perlite and 1% ferrite. In this area of the part, the tensile test generated the following results: breaking strength R = 916.6 MPa, stretch limit LE_{0,2} = 518.9 MPa and elongation A = 7.6%. The material hardness in this area was 320 HBW 10/3000. The graphite content measured in the flywheel area was 9.6 ±0.6%, the number of graphite spheroids per mm⁻² was 261 ±31, the shape of the graphite corresponded with shape VI according to UNE-EN ISO 945-1 standard by 98.0%. The size distribution in the graphite spheroids, according to UNE-EN ISO 945-1 standard, was: 20.4% for size 8, 52.5% for size 7 and 27.1% for size 6. The content of the metal matrix according to UNE 78001 standard was 97% perlite and 3% ferrite. The tensile test carried out in this area of the parts gave rise to the following results: breaking strength R = 927.1 MPa, stretch limit LE_{0,2} = 594.7 MPa and elongation A = 6.2%. The hardness was 331 HBW 10/3000.

## Claims

1. Method for manufacturing a spheroidal pearlitic cast iron part with a pearlite content equal or greater than 90% which comprises:
(i) preparing an alloy the chemical composition of which is the following (percentages expressed by weight with respect to the total weight of the alloy)
C = 3.60-3.70%;
Si = 2.20-2.30%;
Mn = 0.40-0.60%;
P = 0.02-0.04%;
S = 0.005-0.008%;
Cu = 0.90-1.00%;
Mg = 0.03-0.04%;
N = 0.005-0.008%;
the rest of the chemical composition being Fe and other residual elements;
(ii) casting the alloy in a sand mold;
(iii) inoculating an inoculant material in a casting vein with an addition flow rate comprised between 0.6 and 0.8 g/kg, in an amount comprised between 0.20 - 0.25% by weight with respect to the amount of iron cast,
wherein said inoculant material has a granulometry comprised between 0.1 and 0.5 mm and a chemical composition selected between (percentages expressed by weight with respect to the total weight of the inoculant):
a) Si = 75.1%; Al = 0.89%; Ca = 0.93%; S = 0.11% and Ce = 0.70%; or
b) Si = 73.1%; Al = 0.71%; Ca = 1.75 %; S = 0.06% and Bi = 0.88%, the rest being Fe.

2. Method according to claim 1, wherein the alloy has the following chemical composition (percentages expressed by weight with respect to the total weight of the alloy): C = 3.62%; Si = 2.27%; Mn = 0.45%; P = 0.021%; S = 0.008%; Cu = 0.98%; Mg = 0.033%; N = 0.008%; the rest of the composition being Fe and the usual residual elements.

3. Method according to claim 2, wherein the inoculant material has the following chemical composition: (percentages expressed by weight with respect to the total weight of the inoculant): Si = 75.1%; Al = 0.89%; Ca = 0.93%; S = 0.11% and Ce = 0.70%; the rest being Fe.

4. Method according to claim 1, wherein the alloy has the following chemical composition (percentages expressed by weight with respect to the total weight of the alloy): C = 3.60%; Si = 2.21%; Mn = 0.45%; P = 0.023%; S = 0.007%; Cu = 1.01%; Mg = 0.040%; N = 0.007%; the rest of the chemical composition being Fe and other usual residual elements.

5. Method according to claim 4, wherein the inoculant material has the following chemical composition (percentages expressed by weight with respect to the total weight of the inoculant): Si = 73.1%; Al = 0.71%; Ca = 1.75%; S = 0.06% and Bi = 0.88%; the rest being Fe.

6. Spheroidal pearlitic cast iron part obtained by the method according to any one of the previous claims which has a breaking strength (R) greater than 900 MPa, preferably equal to or greater than 905 MPa, more preferably equal or greater than 910 MPa, an elongation comprised between 3.5-7.0%, and a perlite content equal to or greater than 90%, preferably equal to or greater than 95%, more preferably equal to or greater than 97%, and still more preferably equal to or greater than 99%.

7. Part according to claim 6 consisting of a crankshaft.

## Patentansprüche

1. Verfahren zum Herstellen eines Teils aus sphäroidalem perlitischem Gusseisen mit einem Perlitgehalt von gleich oder mehr als 90 %, welches umfasst:
(i) Herstellen einer Legierung mit einer nachfolgenden chemischen Zusammensetzung (die Prozentzahlen sind pro Gewicht bezogen auf das Gesamtgewicht der Legierung ausgedrückt):
C = 3,60 bis 3,70 %,
Si = 2,20 bis 2,30 %,
Mn = 0,40 bis 0,60 %,
P = 0,02 bis 0,04 %,
S = 0,005 bis 0,008 %,
Cu = 0,90 bis 1,00 %,
Mg = 0,03 bis 0,04 %,
N = 0,005 bis 0,008 %,
wobei der Rest der chemischen Zusammensetzung Fe und andere restliche Elemente ist,
(ii) Gießen der Legierung in eine Sandform,
(iii) Impfen eines Impfmittels in den Gießstrom mit einer Zugabeströmungsgeschwindigkeit zwischen 0,6 und 0,8 g/kg in einer Menge zwischen 0,20 und 0,25 Gew.-% bezogen auf die Menge des Gusseisens,
wobei das Impfmittel eine Korngrößenverteilung zwischen 0,1 und 0,5 mm und eine chemische Zusammensetzung ausgewählt aus (die Prozentzahlen sind pro Gewicht bezogen auf das Gesamtgewicht des Impfmittels ausgedrückt) aufweist:
a) Si = 75,1 %, Al = 0,89 %, Ca = 0,93 %, S = 0,11 % und Ce = 0,70 % oder
b) Si = 73,1 %, Al = 0,71 %, Ca 1,75 %, S = 0,06 % und Bi = 0,88 %, wobei der Rest Fe ist.

2. Verfahren nach Anspruch 1, wobei die Legierung die nachfolgende chemische Zusammensetzung aufweist (Prozentzahlen ausgedrückt pro Gewicht bezogen auf das Gesamtgewicht der Legierung): C = 3,62 %, Si = 2,27 %, Mn = 0,45 %, P = 0,021 %, S = 0,008 %, Cu = 0,98 %, Mg = 0,033 %, N = 0,008 %, wobei der Rest der Zusammensetzung Eisen und die gewöhnlichen restlichen Elemente ist.

3. Verfahren nach Anspruch 2, wobei das Impfmittel die nachfolgende chemische Zusammensetzung aufweist (Prozentzahlen ausgedrückt nach Gewicht bezogen auf das Gesamtgewicht des Impfmittels): Si = 75,1 %, Al = 0,89 %, Ca = 0,93 %, S = 0,11 % und Ce = 0,70 %, wobei der Rest Eisen ist.

4. Verfahren nach Anspruch 1, wobei die Legierung die folgende chemische Zusammensetzung aufweist (Prozentzahlen ausgedrückt pro Gewicht bezogen auf das Gesamtgewicht der Legierung): C = 3,60 %, Si = 2,21 %, Mn = 0,45 %, P = 0,023 %, S = 0,007 %, Cu = 1,01 %, Mg = 0,040 %, N = 0,007 %, wobei der Rest der chemischen Zusammensetzung Eisen und andere gewöhnliche restliche Elemente ist.

5. Verfahren nach Anspruch 4, wobei das Impfmittel die nachfolgende chemische Zusammensetzung aufweist (Prozentzahlen ausgedrückt pro Gewicht bezogen auf das Gesamtgewicht des Impfmittels): Si = 73,1 %, Al = 0,71 %, Ca = 1,75 %, S = 0,06 % und Bi = 0,88 %, wobei der Rest Eisen ist.

6. Teil aus sphäroidalem perlitischem Gusseisen erhalten durch ein Verfahren nach einem der vorstehenden Ansprüche, welches eine Bruchfestigkeit (R) von größer als 900 MPa, vorzugsweise von gleich oder größer 905 MPa, besonders bevorzugt von gleich oder mehr als 910 MPa, eine Dehnung zwischen 3,5 und 7,0 % und einen Perlitgehalt von gleich oder mehr als 90 %, vorzugsweise gleich oder mehr als 95 %, besonders bevorzugt gleich oder mehr als 97 % und ganz besonders bevorzugt gleich oder mehr als 99 % aufweist.

7. Teil nach Anspruch 6, welches aus einer Kurbelwelle besteht.

## Revendications

1. Procédé de fabrication d'une pièce en fonte perlitique sphéroïdale ayant une teneur en perlite supérieure ou égale à 90 % qui comprend :
(i) la préparation d'un alliage dont la composition chimique est la suivante
(les pourcentages sont exprimés en poids par rapport au poids total de l'alliage)
C = 3,60 à 3,70 % ;
Si = 2,20 à 2,30 % ;
Mn = 0,40 à 0,60 % ;
P = 0,02 à 0,04 % ;
S = 0,005 à 0,008 % ;
Cu = 0,90 à 1,00 % ;
Mg = 0,03 à 0,04 % ;
N = 0,005 à 0,008 % ;
le reste de la composition chimique étant du Fe et d'autres éléments résiduels ;
(ii) le coulage de l'alliage dans un moule en sable ;
(iii) l'inoculation d'un matériau inoculant dans une veine de coulage avec un débit d'addition compris entre 0,6 et 0,8 g/kg, dans une quantité comprise entre 0,20 et 0,25 % en poids par rapport à la quantité de fonte,
dans lequel ledit matériau inoculant a une granulométrie comprise entre 0,1 et 0,5 mm et une composition chimique choisie parmi (les pourcentages sont exprimés en poids par rapport au poids total de l'inoculant) :
a) Si = 75,1 % ; Al = 0,89 % ; Ca = 0,93 % ; S = 0,11 % et Ce = 0,70 % ; ou
b) Si = 73,1 % ; Al = 0,71 % ; Ca = 1,75 % ; S = 0,06 % et Bi = 0,88 %, le reste étant du Fe.

2. Procédé selon la revendication 1, dans lequel l'alliage a la composition chimique suivante (les pourcentages sont exprimés en poids par rapport au poids total de l'alliage) : C = 3,62 % ; Si = 2,27 % ; Mn = 0,45 % ; P = 0,021 % ; S = 0,008 % ; Cu = 0,98 % ; Mg = 0,033 % ; N = 0,008 % ; le reste de la composition étant du Fe et les éléments résiduels habituels.

3. Procédé selon la revendication 2, dans lequel le matériau inoculant a la composition chimique suivante (les pourcentages sont exprimés en poids par rapport au poids total de l'inoculant) : Si = 75,1 % ; Al = 0,89 % ; Ca = 0,93 % ; S = 0,11 % et Ce = 0,70 % ; le reste étant du Fe.

4. Procédé selon la revendication 1, dans lequel l'alliage a la composition chimique suivante (les pourcentages sont exprimés en poids par rapport au poids total de l'alliage) : C = 3,60 % ; Si = 2,21 % ; Mn = 0,45 % ; P = 0,023 % ; S = 0,007 % ; Cu = 1,01 % ; Mg = 0,040 % ; N = 0,007 % ; le reste de la composition étant du Fe et d'autres éléments résiduels habituels.

5. Procédé selon la revendication 4, dans lequel le matériau inoculant a la composition chimique suivante (les pourcentages sont exprimés en poids par rapport au poids total de l'inoculant) : Si = 73,1 % ; Al = 0,71 % ; Ca = 1,75 % ; S = 0,06 % et Bi = 0,88 % ; le reste étant du Fe.

6. Pièce en fonte perlitique sphéroïdale obtenue par le procédé selon l'une quelconque des revendications précédentes qui a une résistance à la rupture (R) supérieure à 900 MPa, de préférence supérieure ou égale à 905 MPa, de manière davantage préférée supérieure ou égale à 910 MPa, un allongement compris entre 3,5 et 7,0 %, et une teneur en perlite supérieure ou égale à 90 %, de préférence supérieure ou égale à 95 %, de manière davantage préférée supérieure ou égale à 97 %, et de manière encore davantage préférée supérieure ou égale à 99 %.

7. Pièce selon la revendication 6 consistant en un vilebrequin.
